# EUROPÄISCHE PATENTSCHRIFT

(11) **EP 2 764 559 B1**
(45) Veröffentlichungstag und Bekanntmachung des Hinweises auf die Patenterteilung: **06.09.2017**
(21) Anmeldenummer: 12735464.5
(22) Anmeldetag: 12.07.2012
(51) Int. Cl.: H01M 2/20

(54) **LITHIUM-IONEN-BATTERIE MIT EINER ÜBERSTROMSCHUTZEINRICHTUNG**
LITHIUM-ION BATTERY WITH AN OVERCURRENT PROTECTION DEVICE
BATTERIE AU LITHIUM-ION DOTÉE D'UN DISPOSITIF DE PROTECTION CONTRE LA SURINTENSITÉ

(30) Priorität: 08.10.2011 DE 102011115452
(43) Veröffentlichungstag der Anmeldung: 13.08.2014
(73) Patentinhaber: Audi AG, 85045 Ingolstadt (DE)
(72) Erfinder: VERGOSSEN, David, 85049 Ingolstadt (DE)
(74) Vertreter: Herbst, Matthias Heinz
(86) Internationale Anmeldenummer: PCT/EP2012/002927
(87) Internationale Veröffentlichungsnummer: WO 2013/050089

(56) Entgegenhaltungen:
- WO-A1-2011/151981
- DE-A1-102010 002 938
- JP-A- 2004 031 268
- US-A1- 2009 289 598

## Beschreibung

Die Erfindung betrifft eine Lithium-Ionen-Batterie, insbesondere für ein Fahrzeug, mit einer Mehrzahl von in parallel geschalteten Strängen angeordneten Zellen, wobei jeder Strang mehrere in Reihe geschaltete Zellen aufweist, sowie einer Sicherungen umfassenden Überstromschutzeinrichtung.

Lithium-Ionen-Batterien sollen zukünftig als Starterbatterie zum Anlassen eines Verbrennungsmotors in Kraftfahrzeugen eingesetzt werden und die derzeit üblicherweise verwendeten 12 Volt-Blei-Säure-Starterbatterien oder AGM-Batterien ersetzen. Beim Kaltstart eines Verbrennungsmotors müssen kurzzeitig sehr hohe impulsförmige Ströme geliefert werden. Gleichzeitig soll der Spannungseinbruch an den Batteriepolen möglichst gering sein. Die Lastströme bei Starterbatterien sind kurzzeitig wesentlich höher als bei Traktionsbatterien, der Startstrom kann eine Größenordnung von 1000 Ampere oder mehr erreichen.

Das Anlassen eines Verbrennungsmotors mittels des Anlassers bei Minusgraden und einer nur teilweise geladenen Lithium-Ionen-Batterie ist ein kritischer Zustand. Für einen erfolgreichen Startvorgang ist es wichtig, dass die Lithium-Ionen-Batterie in der Lage ist, den Strom zu liefern, der zum Aufbringen des Losreißmomentes des Anlassers erforderlich ist. Dieser Strom muss auch bei Minusgraden geliefert werden, ohne dass dabei die an den Polen der Lithium-Ionen-Batterie zu messende Klemmenspannung unter 6 Volt sinkt. Ein Einbruch der Spannung unter 6 Volt würde dazu führen, dass im Fahrzeug enthaltene Steuergeräte nicht mehr einwandfrei funktionieren. Es ist daher wichtig, dass der Innenwiderstand einer Lithium-Ionen-Batterie möglichst gering ist.

Es ist bereits vorgeschlagen worden, eine Lithium-Ionen-Batterie mit einer Sicherungen umfassenden Überstromschutzeinrichtung zu versehen, um die Folgen interner oder externer Kurzschlüsse zu begrenzen. Ein interner Kurzschluss kann beispielsweise bei einem Fahrzeugaufprall entstehen, bei dem die Batterie derart verformt wird, dass die Zellen sich gegeneinander eindrücken oder anders mechanisch beschädigen. Durch eine solche mechanische Deformation können Kurzschlüsse zwischen einzelnen Zellen entstehen. Bestimmte Typen von Lithium-Ionen-Zellen neigen dazu, elektrisch leitende Verbindungen (Dendriten) zu bilden, die zu leichten Kurzschlüssen innerhalb einer Zelle und somit innerhalb der Lithium-Ionen-Batterie führen können. Externe Kurzschlüsse hingegen sind bedingt durch Kurzschlüsse an den Klemmen oder Polen der Lithium-Ionen-Batterie. Kurzschlüsse innerhalb der Lithium-Ionen-Batterie können zu einer Überhitzung oder zu einem thermischen Durchgehen der Zellen führen. Diese Vorgänge können im schlimmsten Fall zu einer Explosion oder zu einer explosionsähnlichen Reaktion einzelner betroffener Zellen oder im Rahmen einer Kettenreaktion auch zu einer explosionsähnlichen Zerstörung der gesamten Lithium-Ionen-Batterie führen.

Bei einem internen Kurzschluss einer Zelle fließt die Energie der direkt benachbarten Zellen in die defekte Zelle. Bei einer Lithium-Ionen-Batterie, die mehrere parallele Stränge von Zellen aufweist, wobei jeder Strang wiederum mehrere Zellen umfasst, sind die Zellen matrixartig angeordnet und mit einander verschaltet, daher wird eine defekte oder kurzgeschlossene Zelle von allen in der Nähe liegenden Zellen gespeist.

Die Druckschrift US 2009/0289598 A1 offenbart ein Batteriepaket, bei dem mehrere Gruppen von parallel geschalteten Batterien in Serie verbunden werden. Um einer ungewünschten Stromerhöhung der Batterie entgegenzuwirken, können Sicherungen vorgesehen sein.

Ein Verbinder zum Verschalten von Einzel-Batteriezellen zu einem Batterie-Stack ist aus der Druckschrift DE 10 2010 002 938 A1 bekannt. Der zur Batteriekontaktierung genutzte Verbinder ist ein Zweistoff-Verbindungselement.

Die Druckschrift JP 2004031268 A offenbart ein Batteriepaket, bei dem mehrere Stränge von in Serie geschalteten Batteriezellen parallel geschaltet werden. Zwischen die parallel geschalteten Stränge sind Widerstände geschaltet, um die Auswirkungen von Kurzschlüssen zu mindern.

Um die durch Kurzschlüsse verursachten Gefahren zu verringern, ist in der US 2008/0241667 A1 vorgeschlagen worden, jeweils Kathode und Anode aller Zellen eines Strangs mit Hilfe von Bonddrähten elektrisch mit einer Äquipotentialebene zu verbinden, wodurch die einzelnen Zellen parallel geschaltet werden. Die Bonddrähte dienen dabei als Überstromschutzeinrichtung und wirken wie Schmelzsicherungen. Dazu weist eine mit Öffnungen versehene Metallplatte Bonddrähte auf, die an einem Ende mit Batteriezellen verbunden sind. Die Bonddrähte werden durch die Öffnungen in der Metallplatte herausgeführt.

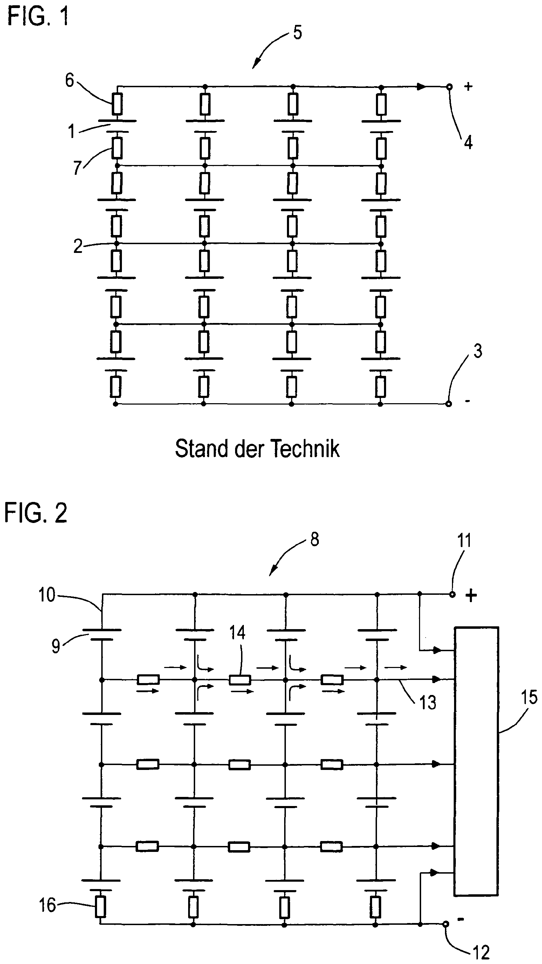

Fig. 1 zeigt ein Ersatzschaltbild der in der erwähnten Druckschrift beschriebenen Batterie. Man erkennt, dass Zellen 1 in mehreren parallelen Strängen 2 angeordnet sind, wobei jeder Strang 2 mit dem Minuspol 3 und dem Pluspol 4 einer Batterie 5 verbunden sind. Jede Zelle 1 wird durch zwei Bonddrähte vor einem zu großen Strom geschützt. Die Bonddrähte wirken wie Schmelzsicherungen, die bei einem Kurzschluss schmelzen, wodurch der Stromfluss in die defekte Zelle und eine Erwärmung verhindert werden. Wie in Fig. 1 gezeigt ist, sind jeder Zelle 1 zwei Sicherungen 6, 7 zugeordnet, die in dem Strang 2 vor und hinter der Zelle 1 angeordnet sind. Obwohl durch die in Fig. 1 gezeigte Schaltung ein guter Schutz vor Kurzschlüssen erzielt wird, wird es als nachteilig angesehen, dass der Gesamtwiderstand der Batterie 5 durch die Sicherungen 6, 7 vergrößert wird. Bei einer Batterie mit n parallelen Strängen und m Zellen pro Strang beträgt der zusätzliche Widerstand R_{F}'=2 R_{F} x m/n, wobei R_{F} der Widerstand einer Sicherung ist. Ein erhöhter Innenwiderstand ist jedoch unerwünscht, da er zu einem Spannungseinbruch beim Kaltstart führen kann.

Der Erfindung liegt daher die Aufgabe zugrunde, eine Lithium-Ionen-Batterie anzugeben, die eine Überstromschutzeinrichtung aufweist, ohne dass sich die der Innenwiderstand in nachteiliger Weise erhöht.

Zur Lösung dieser Aufgabe ist bei einer Lithium-Ionen-Batterie der eingangs genannten Art erfindungsgemäß vorgesehen, dass sie quer zu den parallel geschalteten Strängen geschaltete, jeweils Zellen gleicher Spannungslage zusammenschaltende Querzweige aufweist, in denen bei einem Überstrom schmelzende Sicherungen angeordnet sind, wobei die Lithium-Ionen-Batterie wenigstens eine Stromschiene aufweist, an die die Sicherungen eines Querzweigs angeschlossen sind.

Die Erfindung beruht im Wesentlichen auf der Erkenntnis, dass eine Lithium-Ionen-Batterie mit niedrigem Innenwiderstand geschaffen werden kann, indem die Sicherungen der Überstromschutzeinrichtung überwiegend in den Querzweigen angeordnet sind. Als Querzweig wird dabei eine Leitungsverbindung zwischen zwei parallelen Strängen von Zellen bezeichnet. Sofern es in oder an einer Zelle der Lithium-Ionen-Batterie zu einem Kurzschluss kommt, schmilzt eine dieser Zelle zugeordnete Sicherung, gegebenenfalls auch mehrere in der Nähe angeordnete Sicherungen, wodurch ein Stromfluss zu der kurzgeschlossenen Zelle verhindert wird.

Die erfindungsgemäße Lithium-Ionen-Batterie weist den Vorteil auf, dass die Erhöhung des Innenwiderstands lediglich RF'=R_{F}/4 beträgt, der erhöhte Innenwiderstand ist somit um den Faktor 8 kleiner als der zusätzliche Innenwiderstand des in Fig. 1 gezeigten herkömmlichen Batteriesystems. Eine Verkleinerung des Widerstands um den Faktor 8 verbessert andererseits die Leistung beim Kaltstart eines Fahrzeugs beträchtlich, ebenso wird die Wärmeentwicklung reduziert.

Die erfindungsgemäße Lithium-Ionen-Batterie kann vergleichsweise einfach realisiert werden, indem zwischen Knotenpunkten der sich kreuzenden Stränge und Querzweige eine Sicherung in dem jeweiligen Querzweig angeordnet ist. Vorzugsweise weist jeder Querzweig eine entsprechende Sicherung auf.

Ein noch besseres Verhalten bei einer Überlastung ergibt sich, da die erfindungsgemäße Lithium-Ionen-Batterie wenigstens eine Stromschiene aufweist, an die die Sicherungen eines Querzweigs angeschlossen sind. Auf diese Weise wird eine ungünstige Addition der Widerstandswerte der mehreren Sicherungen in den Querzweigen vermieden. Dieser Nachteil würde sich ansonsten besonders stark beim Balancing, d.h. beim gesteuerten Ladungsausgleich der parallel geschalteten Zellen auswirken. Durch die erfindungsgemäß vorgesehene Stromschiene können die Vorteile der Minimierung der Widerstandswerte in einem Hauptstrompfad beibehalten werden, gleichzeitig wird das Problem einer Verkettung von Widerstandswerten der Querzweige vermieden. Besonders große Probleme würden sich sonst beim Balancing (Symmetrierung) mit impulsförmigen Strömen ergeben, die jedoch durch eine Stromschiene vermieden werden. Im Hinblick auf das Material der Stromschiene wird es besonders bevorzugt, dass die Stromschiene aus Kupfer oder Aluminium besteht.

Gemäß einer Weiterbildung der erfindungsgemäßen Lithium-Ionen-Batterie kann es vorgesehen sein, dass die Stromschiene elektrisch isoliert auf Zellen, insbesondere auf Zellpolen angebracht ist. Vorzugsweise kann die Stromschiene mittels eines elektrisch isolierenden Klebstoffs angebracht sein. Der elektrisch isolierende Klebstoff zeichnet sich durch eine gute Wärmeleitfähigkeit aus.

Es wird besonders bevorzugt, dass die Querzweige in der erfindungsgemäßen Lithium-Ionen-Batterie an ein Batteriemanagementgerät angeschlossen sind, das zur Durchführung eines resistiven oder eines pulsierenden Ladungsausgleichs ausgebildet ist. Das Batteriemanagementgerät stellt sicher, dass ein Ladungsausgleich durchgeführt wird, so dass keine der Zellen überladen oder tiefentladen wird. Das Batteriemanagementgerät kann auf unterschiedliche Arten mit den Zellen oder den Strängen der Zellen verschaltet sein, vorzugsweise sind die Querzweige der Lithium-Ionen-Batterie an das einzige Batteriemanagementgerät angeschlossen.

Bei einer besonders fertigungsgünstigen Variante der erfindungsgemäßen Lithium-Ionen-Batterie ist eine Sicherung als Bonddraht ausgebildet. Alternativ kann eine Sicherung als Schraube ausgebildet sein, deren Größe so bemessen ist, dass sie bei einem Überstrom schmilzt und eine Stromleitung unterbricht. Wenn Schrauben als Sicherung verwendet werden, muss Korrosion an den Kontaktstellen vermieden werden.

Um eine niederohmige Verbindung zwischen Zellpolen zu schaffen, kann es bei der erfindungsgemäßen Lithium-Ionen-Batterie vorgesehen sein, dass Zellpole mittels eines Zellverbinders miteinander verbunden sind. Vorzugsweise besteht der Zellverbinder aus zwei verschiedenen Werkstoffen, insbesondere aus zwei verschiedenen Metallen. Mittels eines derartigen Zellverbinders können aus unterschiedlichen Metallen bestehende Zellen, insbesondere deren Zellpole, miteinander verbunden werden.

Eine besonders gute stoffschlüssige Verbindung der beiden Werkstoffe des Zellverbinders ergibt sich, wenn die beiden Metalle miteinander verschweißt sind. Vorzugsweise besteht ein Zellpol aus dem gleichen Werkstoff wie der kontaktierte Abschnitt des Zellverbinders. Der Zellpol kann stoffschlüssig mit dem Zellverbinder verbunden sein, insbesondere durch ein Schweißverfahren, vorzugsweise durch Laserschweißen.

Weitere Vorteile und Einzelheiten der Erfindung werden anhand von Ausführungsbeispielen unter Bezugnahme auf die Zeichnungen erläutert. Die Zeichnungen sind schematische Darstellungen und zeigen:
- Fig. 1: ein Schaltbild einer herkömmlichen Batterie mit einer Überstromschutzeinrichtung;
- Fig. 2: ein Schaltbild eines ersten Ausführungsbeispiels einer erfindungsgemäßen Lithium-Ionen-Batterie;
- Fig. 3: ein Schaltbild eines zweiten Ausführungsbeispiels einer erfindungsgemäßen Lithium-Ionen-Batterie;
- Fig. 4: eine perspektivische Ansicht der Lithium-Ionen-Batterie von Fig. 3;
- Fig. 5: den Kontaktierungsbereich einer Zelle in einer vergrößerten geschnittenen Ansicht; und
- Fig. 6: einen Zellverbinder mit einer Sicherung in einer vergrößerten geschnittenen Ansicht.

Die in Fig. 2 gezeigte Lithium-Ionen-Batterie 8 besteht im Wesentlichen aus einer Mehrzahl von Lithium-Ionen-Zellen, die nachfolgend als Zellen 9 bezeichnet werden. Die Lithium-Ionen-Batterie 8 umfasst mehrere Stränge 10, in dem dargestellten Ausführungsbeispiel sind vier parallele Stränge 10 vorgesehen. Die Anzahl der Stränge kann jedoch variieren und ist nicht auf das dargestellte Ausführungsbeispiel beschränkt. Jeder Strang 10 umfasst mehrere in Reihe geschaltete Zellen 9, in dem dargestellten Ausführungsbeispiel umfasst jeder Strang 10 vier Zellen 9, auch diese Zahl kann variieren und ist nicht als Beschränkung zu verstehen. Jeder Strang 10 der Zellen 9 ist einerseits mit dem Pluspol 11 und andererseits dem Minuspol 12 der Lithium-Ionen-Batterie 8 verbunden. Die parallel geschalteten Zellen bilden jeweils eine P-Gruppe, wodurch ein gegenseitiger Ladungsausgleich innerhalb der P-Gruppe ermöglicht wird.

Wie in Fig. 2 gezeigt ist, weist die Lithium-Ionen-Batterie 8 quer zu den parallelen Strängen 10 angeordnete Querzweige 13 auf, in denen Sicherungen 14 angeordnet beziehungsweise geschaltet sind. Die Stränge 10 und die in Fig. 2 senkrecht dazu verlaufenden Querzweige 13 kreuzen sich in Knotenpunkten, zwischen Knotenpunkten ist in dem jeweiligen Querzweig 13 beziehungsweise dem jeweiligen Abschnitt zwischen zwei benachbarten Knotenpunkten jeweils eine Sicherung 14 vorgesehen.

Bestandteil der Lithium-Ionen-Batterie 8 ist ferner ein Batteriemanagementsystem 15, das mit den einzelnen Querzweigen 13 verbunden ist. Das Batteriemanagementsystem 15 bewirkt, dass die Zellen 9 gleichmäßig geladen oder entladen werden. Die zum Batteriemanagementsystem 15 gerichteten Ströme, die durch Pfeile symbolisch dargestellt sind, sind Ausgleichsströme oder Balancingströme. Dadurch wird vermieden, dass keine Zelle überladen oder tiefentladen wird. In dem in Fig. 2 gezeigten Schaltbild erkennt man, dass jeweils Zellen 9 gleicher Spannungslage zusammengeschaltet sind. Auf diese Weise können sämtliche Zellen 9 der Lithium-Ionen-Batterie 8 mit einem einzigen Batteriemanagementsystem 15 überwacht werden. Die an einen Querzweig angeschlossenen Zellen gleichen durch ihre parallele Verschaltung eventuelle Ungleichheiten ihrer Ladung selbständig aus. In der Nähe der Sicherung 14 sind weitere typische Balancingströme durch Pfeile dargestellt.

Zusätzlich zu den in den Querzweigen 13 angeordneten Sicherungen 14 ist je eine Sicherung 16 in einem Strang 10 des Hauptstrompfads vorgesehen.

Falls in einer Zelle 9 oder außerhalb einer bestimmten Zelle ein Kurzschluss auftritt, bieten die Sicherungen 14, 16 denselben Schutz vor internen und externen Kurzschlüssen wie die in der Batterie von Fig. 1 verwendeten Sicherungen. Der Vorteil der Lithium-Ionen-Batterie 8 ist jedoch, dass sich der Innenwiderstand lediglich in geringem Maße erhöht, wodurch sich ein besseres Kaltstartverhalten ergibt.

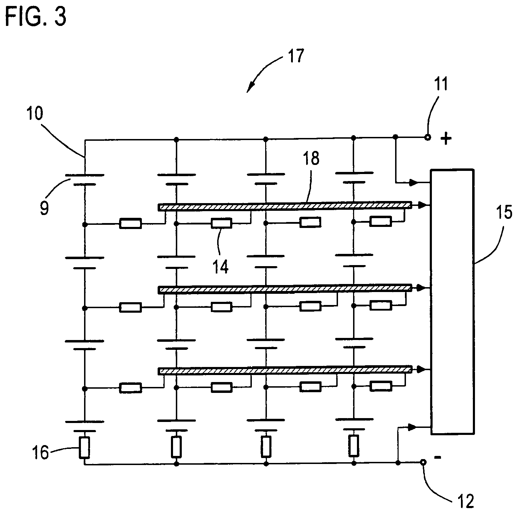

Fig. 3 zeigt ein zweites Ausführungsbeispiel einer Lithium-Ionen-Batterie. Übereinstimmende Bestandteile werden dabei mit denselben Bezugszeichen wie in Fig. 2 bezeichnet.

Die Lithium-Ionen-Batterie 17 unterscheidet sich von derjenigen des vorangegangenen Ausführungsbeispiels durch Stromschienen 18, an die die Sicherungen 14 eines Querzweigs angeschlossen sind. Die Stromschiene 18 bildet dabei einen Hauptstrompfad. Im Vergleich zu dem hohen Innenwiderstand der Sicherungen 14 weist die Stromschiene 18 einen sehr geringen elektrischen Widerstand auf. Dadurch wird eine Verkettung beziehungsweise Addition der Widerstände einzelner Sicherungen 14 vermieden. Die Verwendung einer Stromschiene ist insbesondere bei einem aktiven Ladungsausgleichssystem (Batteriemanagementsystem 15) von Vorteil. Derartige Ladungsausgleichssysteme erzeugen impulsförmige Ströme, die in der Folge normalerweise zu unerwünschten Spannungsabfällen über die Sicherungen in den Querzweigen führen. Da sich die Widerstände der einzelnen Sicherungen addieren würden, wird ein gleichmäßiger Ladungsausgleich verhindert. Dieser negative Effekt wird jedoch durch die Stromschiene 18 vermieden, wobei es keine Rolle spielt, ob das Batteriemanagementsystem 15 auf einem resistiven oder einem pulsierenden Ladungsausgleichsverfahren beruht. Dieser Effekt beruht im Wesentlichen darauf, dass die Stromschiene 18 eine niederohmige serielle Verschaltung bewirkt.

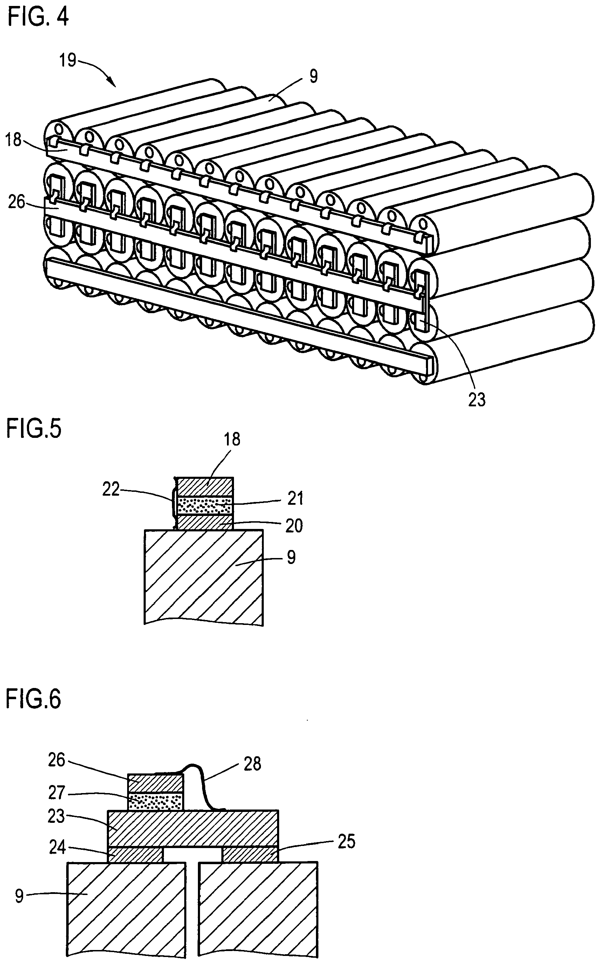

Fig. 4 zeigt ein weiteres Ausführungsbeispiel einer Lithium-Ionen-Batterie 19, die grundsätzlich wie die in Fig. 3 gezeigte Lithium-Ionen-Batterie 17 aufgebaut ist. Batteriezellen 9 gleicher Polarität bilden eine Reihe, insgesamt sind vier derartige Reihen vorgesehen. Auf die Pole der Zellen 9 ist eine Stromschiene 18 geklebt.

Fig. 5 zeigt eine geschnittene Ansicht einer Zelle 9, die einen Pol 20 aufweist, auf den oberseitig eine elektrisch isolierende Kleberschicht 21 aufgebracht ist. Die Kleberschicht 21 trennt den Pol 20 von der Stromschiene 18. Ein Bonddraht 22 verbindet die Stromschiene 18 mit dem Pol 20 der Zelle 9. Die Kleberschicht 21 zeichnet sich durch eine gute Wärmeleitung aus. Durch die Stromschiene 18 werden die Zellen 9 parallel zueinander verschaltet, die Bonddrähte 22 dienen als Schmelzsicherung. Die in Fig. 4 untere Reihe der Zellen 9 ist ebenfalls durch eine Stromschiene parallel verschaltet.

Die serielle Verschaltung der Zellen 9 erfolgt durch Zellverbinder 23, wobei ein Zellverbinder 23 zwei benachbarte Zellen 9 elektrisch miteinander kontaktiert.

Fig. 6 zeigt eine geschnittene Seitenansicht einer Zelle im Bereich des Zellverbinders. Der Zellverbinder 23 ist quaderförmig ausgebildet, seine Endabschnitte kontaktieren Pole 24, 25 von Zellen 9. Wie in Fig. 4 gezeigt ist, werden jeweils zwei Zellen 9 durch einen Zellverbinder 23 verbunden, eine Stromschiene 26 ist quer zu den Zellverbindern 23 angeordnet. Die Stromschiene 26 ist gegenüber den Zellverbindern 23 durch eine Kleberschicht 27 elektrisch isoliert. Es handelt sich dabei um das gleiche Material wie bei der Kleberschicht 21, das thermisch sehr gut leitend ist. Bonddrähte 28 verbinden die Stromschiene 26 mit dem Zellverbinder 23 und dienen als Schmelzsicherung.

Sofern der Zellverbinder 23 und die mit ihm verbundenen Pole aus demselben Metall bestehen, ist der Zellverbinder mit den Polen verschweißt. Allerdings sich auch andere mechanische Befestigungen wie Klemmen, Schrauben, Nieten und dergleichen denkbar.

Falls die mittels des Zellverbinders zu kontaktierenden Pole aus unterschiedlichen Metallen bestehen, wird ein bimetallischer Zellverbinder verwendet, der aus den jeweiligen Materialien, insbesondere den Metallen, besteht und durch Reibschweißen hergestellt worden ist. Die aus den unterschiedlichen Metallen bestehenden Endabschnitte eines derartigen Zellverbinders sind dabei stoffschlüssig mit den aus unterschiedlichen Metallen bestehenden Polen der Zellen verschweißt.

## Patentansprüche

1. Lithium-Ionen-Batterie, insbesondere für ein Fahrzeug, mit einer Mehrzahl von in parallel geschalteten Strängen angeordneten Zellen, wobei jeder Strang mehrere in Reihe geschaltete Zellen aufweist, sowie einer Sicherungen umfassenden Überstromschutzeinrichtung,
**dadurch gekennzeichnet,**
**dass** die Lithium-Ionen-Batterie (8, 17, 19) quer zu den parallel geschalteten Strängen (10) geschaltete, jeweils Zellen gleicher Spannungslage zusammenschaltende Querzweige (13) aufweist, in denen bei einem Überstrom schmelzende Sicherungen (14) angeordnet sind, wobei die Lithium-Ionen-Batterie wenigstens eine Stromschiene (18) aufweist, an die die Sicherungen (14) eines Querzweigs (13) angeschlossen sind.

2. Lithium-Ionen-Batterie nach Anspruch 1,
**dadurch gekennzeichnet,**
**dass** zwischen Knotenpunkten der sich kreuzenden Stränge (10) und Querzweige (13) eine Sicherung (14) in dem jeweiligen Querzweig (13) angeordnet ist.

3. Lithium-Ionen-Batterie nach Anspruch 1 oder 2,
**dadurch gekennzeichnet,**
**dass** die Stromschiene (18) aus Kupfer oder Aluminium besteht.

4. Lithium-Ionen-Batterie nach einem der vorangehenden Ansprüche,
**dadurch gekennzeichnet,**
**dass** die Stromschiene (18) elektrisch isoliert auf Zellen (9), insbesondere auf Zellpolen (20) angebracht ist, vorzugsweise mittels eines elektrisch isolierenden Klebstoffs (21).

5. Lithium-Ionen-Batterie nach einem der vorangehenden Ansprüche,
**dadurch gekennzeichnet,**
**dass** die Querzweige (13) an ein Batteriemanagementgerät (15) angeschlossen sind, das zur Durchführung eines resistiven oder eines pulsierenden Ladungsausgleichs ausgebildet ist.

6. Lithium-Ionen-Batterie nach einem der vorangehenden Ansprüche,
**dadurch gekennzeichnet,**
**dass** eine Sicherung (14) als Bonddraht (22) oder als Schraube ausgebildet ist.

7. Lithium-Ionen-Batterie nach einem der vorangehenden Ansprüche,
**dadurch gekennzeichnet,**
**dass** Zellpole (24, 25) mittels eines aus zwei verschiedenen Werkstoffen, insbesondere zwei verschiedenen Metallen, bestehenden Zellverbinders (23) miteinander verbunden sind.

8. Lithium-Ionen-Batterie nach Anspruch 7,
**dadurch gekennzeichnet,**
**dass** die beiden Werkstoffe des Zellverbinders (23), insbesondere die beiden Metalle, miteinander verschweißt sind.

9. Lithium-Ionen-Batterie nach Anspruch 7 oder 8,
**dadurch gekennzeichnet,**
**dass** ein Zellpol (24, 25) aus dem gleichen Werkstoff wie der kontaktierte Abschnitt des Zellverbinders (23) besteht und stoffschlüssig mit dem Zellverbinder (23) verbunden ist, insbesondere durch ein Schweißverfahren, vorzugsweise durch Laserschweißen.

## Claims

1. Lithium-ion battery, in particular for a vehicle, comprising a plurality of cells arranged in parallel strands, wherein each strand comprises a plurality of cells connected in series, and an overcurrent protection device comprising fuses,
**characterised in that**
the lithium-ion battery (8, 17, 19) comprises cross-branches (13) in which fuses (14) which blow in the event of overcurrent are arranged, the cross-branches being connected transversely to the parallel strands (10) and interconnecting cells of the same voltage level, wherein the lithium-ion battery comprises at least one busbar (18) to which the fuses (14) of a cross-branch (13) are connected.

2. Lithium-ion battery according to claim 1,
**characterised in that**
a fuse (14) is arranged in the respective cross-branch (13) between nodes/junctions of crossing strands (10) and cross-branches (13).

3. Lithium-ion battery according to claim 1 or 2,
**characterised in that**
the busbar (18) is made of copper or aluminium.

4. Lithium-ion battery according to any of the preceding claims,
**characterised in that**
the busbar (18) is mounted electrically isolated on cells (9), in particular on cell poles (20), preferably by means of an electrically isolating adhesive (21).

5. Lithium-ion battery according to any of the preceding claims,
**characterised in that**
the cross-branches (13) are connected to a battery management device (15) configured to perform a resistive or pulsating charge balancing.

6. Lithium-ion battery according to any of the preceding claims,
**characterised in that**
a fuse (14) is formed as a bond wire (22) or as a screw.

7. Lithium-ion battery according to any of the preceding claims,
**characterised in that**
the cell poles (24, 25) are connected to each other by means of a cell connector (23) consisting of two different materials, in particular two different metals.

8. Lithium-ion battery according to claim 7,
**characterised in that**
the two materials of the cell connector (23), in particular the two metals, are welded together.

9. Lithium-ion battery according to claim 7 or 8,
**characterised in that**
a cell pole (24, 25) is made of the same material as the contacted section of the cell connector (23) and is connected to the cell connector (23) in a material-bonding manner, in particular by a welding procedure, preferably by laser welding.

## Revendications

1. Batterie lithium-ion, en particulier pour un véhicule, avec une pluralité d'éléments disposés dans des lignes montées en parallèle, dans laquelle chaque ligne présente plusieurs éléments montés en série, ainsi qu'un dispositif de protection contre des courants de surcharge comprenant des disjoncteurs,
**caractérisée en ce**
**que** la batterie lithium-ion (8, 17, 19) présente des branches transversales (13) montées de manière transversale par rapport aux lignes (10) montées en parallèle, interconnectant respectivement des éléments à valeur de tension identique, dans lesquelles branches transversales sont disposés des disjoncteurs (14) fondant en présence d'un courant de surcharge, dans laquelle la batterie lithium-ion présente au moins un rail conducteur (18), auquel les disjoncteurs (14) d'une branche transversale (13) sont raccordés.

2. Batterie lithium-ion selon la revendication 1,
**caractérisée en ce**
**qu'**un disjoncteur (14) dans la branche transversale (13) respective est disposé entre des noeuds des lignes (10) se croisant et la branche transversale (13).

3. Batterie lithium-ion selon la revendication 1 ou 2,
**caractérisée en ce**
**que** le rail conducteur (18) est constitué de cuivre ou d'aluminium.

4. Batterie lithium-ion selon l'une quelconque des revendications précédentes,
**caractérisée en ce**
**que** le rail conducteur (18) est installé de manière électriquement isolée sur des éléments (9), en particulier sur des pôles d'élément (20), de préférence au moyen d'une colle (21) à isolation électrique.

5. Batterie lithium-ion selon l'une quelconque des revendications précédentes,
**caractérisée en ce**
**que** les branches transversales (13) sont raccordées à un appareil de gestion de batterie (15), qui est réalisé afin de mettre en oeuvre un équilibre des charges résistif ou par impulsions.

6. Batterie lithium-ion selon l'une quelconque des revendications précédentes,
**caractérisée en ce**
**qu'**un disjoncteur (14) est réalisé sous la forme d'un fil de liaison (22) ou d'une vis.

7. Batterie lithium-ion selon l'une quelconque des revendications précédentes,
**caractérisée en ce**
**que** des pôles d'élément (24, 25) sont reliés les uns aux autres au moyen d'un connecteur d'éléments (23) constitué de deux matériaux différents, en particulier de deux métaux différents.

8. Batterie lithium-ion selon la revendication 7,
**caractérisée en ce**
**que** les deux matériaux du connecteur d'éléments (23), en particulier les deux métaux, sont soudés l'un à l'autre.

9. Batterie lithium-ion selon la revendication 7 ou 8,
**caractérisée en ce**
**qu'**un pôle d'élément (24, 25) est constitué du même matériau que le tronçon mis en contact du connecteur d'éléments (23) et est relié par liaison de matière au connecteur d'éléments (23), en particulier par un procédé de soudage, de préférence par un soudage par laser.
